# EUROPÄISCHE PATENTSCHRIFT

(11) **EP 3 295 043 B1**
(45) Veröffentlichungstag und Bekanntmachung des Hinweises auf die Patenterteilung: **21.07.2021**
(21) Anmeldenummer: 16720412.2
(22) Anmeldetag: 03.05.2016
(51) Int. Cl.: F16B 25/00, F16B 25/02, F16B 25/10

(54) **SCHRAUBE MIT UNTERBROCHENEN SCHABEKANTEN**
SCREW WITH INTERRUPTED SCRAPING RIB
VIS AVEC NERVURE DE COUPE INTERROMPU

(30) Priorität: 12.05.2015 DE 102015107467
(43) Veröffentlichungstag der Anmeldung: 21.03.2018
(73) Patentinhaber: Adolf Würth GmbH & Co. KG, 74653 Künzelsau (DE); Würth International AG, 7000 Chur (CH)
(72) Erfinder: ECKERT, Rainer, 97990 Weikersheim (DE); WUNDERLICH, Andreas, Kupferzell 74635 (DE)
(74) Vertreter: Dilg, Haeusler, Schindelmann Patentanwaltsgesellschaft mbH
(86) Internationale Anmeldenummer: PCT/EP2016/059816
(87) Internationale Veröffentlichungsnummer: WO 2016/180661

(56) Entgegenhaltungen:
- EP-A1- 0 939 235
- EP-A1- 1 357 303
- EP-A1- 2 395 251
- EP-A2- 1 411 252
- DE-A1- 19 525 732
- DE-A1-102008 057 678
- DE-A1-102013 213 338
- DE-U1-202011 100 601

## Beschreibung

Die Erfindung betrifft eine Schraube, ein Verfahren zum Herstellen einer Schraube und eine Verwendung.

Eine Schraube ist ein Bolzen, der einen Antrieb aufweisen kann, wobei der Bolzen außen mit einem Gewinde versehen ist. Bei Schrauben mit Kopf dient die Ringfläche unter dem Kopf als Anschlag gegen das mit ihm zu befestigende Teil.

Aus EP 0,589,398 B1 bzw. DE 10 2010 028 344 A1 ist für einen Untergrund aus Kunststoff oder einem Leichtmetall bekannt, eine Schraube mit einem Gewinde in den Untergrund einzudrehen, wobei zwischen den Gewindegängen nichtzylindrische Kernabschnitte angeordnet sind, die sich in Richtung Schraubenkopf verjüngen. Dadurch soll das bei dem Eindrehen verdrängte Material des Untergrunds aus Kunststoff oder Leichtmetall längs jedes Kernabschnittes lediglich in eine rückseitige Richtung bis in den Kernabschnittsbereich kleinsten Durchmessers fließen, um nach einem in aller Regel zuvor durchgeführten Vorbohren ein verringertes Einschraubmoment der Schraube beim Eindrehen zu ermöglichen.

Für das Einbringen einer Schraube in einen Untergrund aus Kunststoff ist vorgesehen, in dem Kunststoffuntergrund ein Loch vorzubohren bzw. dieses beim Spritzen vorzusehen (Urformen) und nachfolgend eine Schraube in das Loch einzudrehen. Das Loch wird mit einem Durchmesser vorgebohrt, der größer als der Schaftdurchmesser der Schraube ist. Dabei können Abschnitte einer Schraube für einen Kunststoffuntergrund zwischen benachbarten Gewindegängen eine von einer Kreiszylindergeometrie abweichende Gestalt haben. Bei einer als RST bezeichneten Schraube der Firma Reyher zum Eindrehen in einen vorgebohrten Kunststoffuntergrund können Abschnitte der Schraube zwischen benachbarten Gewindegängen vom Schraubenkopf weg zum gegenüberliegenden Schraubenende hin verjüngend ausgebildet sein. Anschaulich schneiden sich die hohen Gewindegänge solcher Schrauben für Kunststoffuntergründe in das Kunststoffmaterial ein, das an das vorgebohrte Bohrloch angrenzt. Anders ausgedrückt beruht die Verankerungswirkung solcher Schrauben für Kunststoffuntergründe einzig auf der Verankerung der Gewindegänge in dem vorgebohrten Untergrund, wohingegen der Schraubenschaft in dem vorgebohrten Bohrloch im Wesentlichen frei liegt.

Gänzlich andere technische Prinzipien und physikalische Rahmenbedingungen als für Untergründe aus Kunststoff oder Leichtmetall gelten für das Einbringen einer Schraube in Holz. Beim Einbringen einer Schraube in Holz wird auf das Bilden einer Vorbohrung in der Regel verzichtet, vielmehr wird eine Holzschraube typischerweise in einen massiven Holzuntergrund vorbohrungsfrei eingedreht. Dabei schneidet sich das Gewinde einer Holzschraube in dem Holzuntergrund sein Gegengewinde selbst. Ein Beispiel für eine bekannte Holzschraube ist die von der Firma Würth vertriebene Schraube Assy Plus oder Assy 3.0. Ein Maß für die Güte der Verankerung einer Holzschraube in einem Holzuntergrund ist der Auszugswert. Damit wird die Zugkraft bezeichnet, die zum Herausziehen der Holzschraube aus dem Holzuntergrund, mithin zum Überwinden der Haltekraft der Holzschraube in dem Holzuntergrund, erforderlich ist.

Wenngleich die bekannte Holzschraube vom Typ Assy Plus bzw. Assy 3.0 bereits sehr gute Auszugswerte zeigt, wäre eine weiter verbesserte Auszugsfestigkeit einer Holzschraube dennoch wünschenswert. Eine solche Schraube soll natürlich hinsichtlich der Fertigbarkeit günstige Eigenschaften aufweisen.

DE 195 25 732 offenbart eine Schraube mit einem Schraubenkopf, einem Schraubenschaft, der ein Gewinde aufweist, sowie mit einem Schraubenspitzenabschnitt, der mindestens eine Fräsrippe aufweist, die eine über die Oberfläche des Schraubenspitzenabschnittes vorspringende Fräskante bildet.

EP 0 939 235 offenbart eine Schraube mit einem Schaftteil und einer Spitze sowie mindestens einer Schneide im Spitzenbereich, wobei sich ein Gewinde mindestens über Teillängen des Schaftteiles und der Spitze erstreckt, wobei die Schneide an mindestens einer Rippe ausgebildet ist, die über den Kerndurchmesser des Schaftteiles vorsteht und einen kleineren Neigungswinkel als das Gewinde zur Längsachse der Schraube hat und wobei sich das Gewinde über die gesamte Länge der Spitze bis zum spitzen Ende der Schraube erstreckt, wobei die Spitze einen rippenfreien kegelförmigen Endabschnitt aufweist, über den das Gewinde sich durchgehend fortsetzt.

Es ist eine Aufgabe der vorliegenden Erfindung, eine einfach herstellbare Schraube mit hoher Haltekraft bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Schraube bereitgestellt, die einen sich axial erstreckenden Schaftabschnitt, ein Gewinde an dem Schaftabschnitt, das ausgehend von dem Schaftabschnitt sich radial erstreckende Gewindegänge aufweist, einen sich an den Schaftabschnitt anschließenden Schraubenspitzenabschnitt, mindestens eine erste Schabekante an (zum Beispiel auch an, insbesondere nur an) dem Schraubenspitzenabschnitt (insbesondere über den Schraubenspitzenabschnitt radial hervorstehend), und mindestens eine zweite Schabekante in (zum Beispiel auch in, insbesondere nur in) einem zu dem Schraubenspitzenabschnitt benachbarten Bereich des Schaftabschnitts (insbesondere über den Schaftabschnitt radial hervorstehend) aufweist, wobei die mindestens eine erste Schabekante und die mindestens eine zweite Schabekante voneinander beabstandet sind und sich in axialer Richtung über unterschiedliche (d.h. nicht vollständig identische, vorzugsweise axial überlappungsfreie) Bereiche der Schraube hinweg erstrecken.

Gemäß einem anderen Ausführungsbeispiel der vorliegenden Erfindung ist ein Verfahren zum Herstellen einer Schraube (insbesondere einer Holzschraube) zum (insbesondere vorbohrungsfreien) Einbringen in einen Untergrund (insbesondere einen Holzuntergrund) geschaffen, wobei bei dem Verfahren ein sich axial erstreckender Schaftabschnitt ausgebildet wird, ein Gewinde an dem Schaftabschnitt mit ausgehend von dem Schaftabschnitt sich radial erstreckenden Gewindegängen ausgebildet wird, ein sich an den Schaftabschnitt anschließender Schraubenspitzenabschnitt ausgebildet wird, mindestens eine erste Schabekante an dem Schraubenspitzenabschnitt ausgebildet wird, mindestens eine zweite Schabekante in einem zu dem Schraubenspitzenabschnitt benachbarten Bereich des Schaftabschnitts ausgebildet wird, und die mindestens eine erste Schabekante gegenüber der mindestens einen zweiten Schabekante derart beabstandet ausgebildet wird, dass sich die mindestens eine erste Schabekante und die mindestens eine zweite Schabekante in axialer Richtung über unterschiedliche Bereiche der Schraube hinweg erstrecken.

Gemäß einem weiteren Ausführungsbeispiel der vorliegenden Erfindung wird eine Schraube mit den oben beschriebenen Merkmalen zum insbesondere vorbohrungsfreien Einbringen in einen Holzuntergrund verwendet.

Im Rahmen dieser Anmeldung wird unter dem Begriff "Schabekante" insbesondere eine während des Setzvorgangs der Schraube gegen den Untergrund gerichtete und gegenüber dem Schraubenspitzenabschnitt radial hervorstehende scharfe Kante oder Schneide verstanden, die beim Eindrehen der Schraube in den Untergrund Material desselben abschabt, schneidet oder fräst.

Gemäß einem Ausführungsbeispiel kann eine Schraube bereitgestellt werden, die einen speziell zum Erreichen hoher Auszugskräfte bei mäßigen Setzkräften ausgebildeten, mindestens eine erste Schabekante aufweisenden Schraubenspitzenabschnitt und einen daran insbesondere direkt angrenzenden und entsprechend konfigurierten, mindestens eine zweite Schabekante aufweisenden schraubenspitzenseitigen Endbereich eines Schaftabschnitts aufweist. Um für die Schraube hohe Auszugskräfte (d.h. hohe Kräfte, um eine gesetzte Schraube (unerwünscht) aus dem Untergrund herauszuziehen) zu erzielen und dennoch einen geringen Kraftaufwand zum Einbringen der Schraube in den Untergrund zu erreichen, werden gemäß einem exemplarischen Ausführungsbeispiel der Erfindung mindestens zwei unterbrochene Schabekanten am Schraubenspitzenabschnitt bzw. im Schaftabschnitt vorgesehen, welche die Schraube während des Setzvorgangs im Wege eines schabenden Entfernens von Material des Untergrunds unterstützen. Durch die beschriebene Positionierung der Schabekanten sowie deren beabstandetes Vorsehen wird aber sichergestellt, dass die mittels der Schabekanten entfernte Materialmenge des Untergrunds gezielt begrenzt wird. Dadurch wird vermieden, dass die in den Untergrund eingebrachte Schraube aufgrund übermäßigen Materialabtrags zu locker im Untergrund sitzt, was dazu führen würde, dass die Schraube schon mit geringen Kräften wieder aus dem Untergrund herausgelöst werden könnte. Anschaulich kann mittels mindestens einer schraubenspitzenseitigen ersten Schabekante ein geschabtes Loch in dem Untergrund maximal bis zu einem Kerndurchmesser des Schaftbereichs (d.h. einem minimalen Durchmesser des Schaftabschnitts) erweitert werden. Mit der nahe dem Schraubenspitzenabschnitt, aber schon im Schaftabschnitt angeordneten mindestens einen zweiten Schabekante kann dann in einem schraubenkopfnäheren Bereich der eingeschraubten Schraube eine radiale Aufweitung des Lochs bis in den Bereich der Gewindegänge erfolgen. In einem nicht schabfähigen Bereich zwischen den Schabekanten erfolgt aufgrund der Unterbrechung vorteilhaft kein Materialabtrag, was gute Auszugswerte der Schraube fördert. Insgesamt kann mit der beschriebenen Anordnung von Schabekanten also ein übermäßiger Abtrag von Untergrundmaterial, insbesondere in radialer Richtung, vermieden werden. Durch das Unterbrechen bzw. beabstandete Vorsehen der Schabekanten im Vergleich zu einer durchgehenden Schabekante kann die beim Eindrehen der Schraube einwirkende Kraft bzw. ein resultierender Druck auf den Untergrund (insbesondere das Holz) vorteilhaft reduziert werden, wodurch ein übermäßiges Aufweiten und somit eine Beeinträchtigung der Auszugskraft der Schraube vermieden sind.

Gemäß einem Ausführungsbeispiel ist somit eine insbesondere vorteilhaft als Holzschraube einsetzbare Schraube bereitgestellt, die weiter insbesondere ohne die Notwendigkeit des Bildens eines Bohrlochs vor dem Einbringen der Schraube in einen Holzuntergrund vorzugsweise selbstschneidend bzw. selbstbohrend mit hoher Auszugskraft in Letzterem verankert werden kann.

Im Weiteren werden zusätzliche exemplarische Ausführungsbeispiele der Schraube, des Verfahrens und der Verwendung beschrieben.

Gemäß einem exemplarischen Ausführungsbeispiel ist die mindestens eine erste Schabekante in axialer Richtung der Schraube überlappungsfrei mit der mindestens einen zweiten Schabekante ausgebildet. Anders ausgedrückt gibt es dann in axialer Erstreckungsrichtung der Schraube einen Axialabschnitt zwischen dem schraubenkopfseitigen Ende der mindestens einen ersten Schabekante und dem schraubenspitzenseitigen Ende der mindestens einen zweiten Schabekante, in welchem Axialabschnitt weder die mindestens eine erste Schabekante noch die mindestens eine zweite Schabekante vorgesehen ist.

Gemäß einem exemplarischen Ausführungsbeispiel können sich die Gewindegänge axial bis in den Schraubenspitzenabschnitt hinein (insbesondere sogar bis zu einem Schraubenspitzenende) erstrecken. Dadurch kann das drehende Einbringen der Schraube und ein Schneiden eines Gegengewindes in dem Untergrund erleichtert werden. Die mindestens eine erste Schabekante und/oder die mindestens eine zweite Schabekante kann oder können sich in axialer Richtung über einen oder mehrere der Gewindegänge hinweg erstrecken oder können im Bereich eines oder mehrerer Gewindegänge unterbrochen sein.

Gemäß einem exemplarischen Ausführungsbeispiel der Erfindung steht die mindestens eine erste Schabekante gegenüber dem Schraubenspitzenabschnitt weniger weit radial hervor als ein in diesem Bereich vorgesehener Gewindegang. Alternativ oder ergänzend kann die mindestens eine zweite Schabekante gegenüber dem Schaftabschnitt weniger weit radial hervorstehen als ein in diesem Bereich vorgesehener Gewindegang. Dadurch wird durch die jeweilige Schabekante das Schneiden eines Gegengewindes in dem Untergrund beim Eindrehen der Schraube in denselben in vorteilhafter Weise nicht gestört.

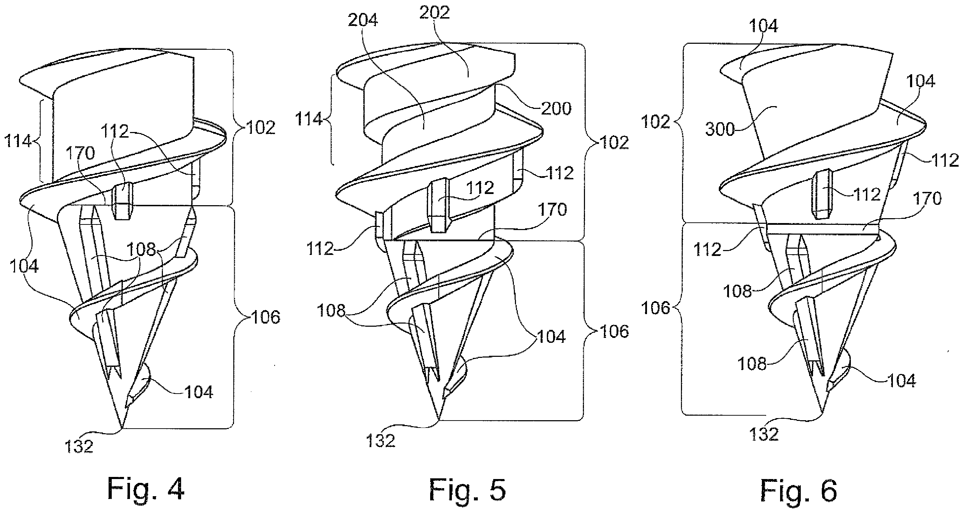

Gemäß einem exemplarischen Ausführungsbeispiel kann sich die mindestens eine zweite Schabekante ganz oder teilweise innerhalb eines schraubenspitzennächsten der sich zumindest teilweise in dem Schaftabschnitt befindlichen Gewindegänge erstrecken. Mit anderen Worten kann die mindestens eine zweite Schabekante zumindest zum Teil innerhalb desjenigen der zumindest teilweise in dem Schaftabschnitt befindlichen Gewindegänge lokalisiert sein, der am nächsten zu der Schraubenspitze angeordnet ist, insbesondere sich nur genau teilweise in den Schraubenspitzenabschnitt hineinerstreckt. Weiter insbesondere kann die mindestens eine zweite Schabekante in axialer Richtung unterhalb des schraubenspitzennächsten der sich zumindest teilweise in dem Schaftabschnitt befindlichen Gewindegänge enden, noch weiter insbesondere sich bis an diesen Gewindegang hin erstrecken (siehe Figur 4 bis Figur 6).

Erfindungsgemäß sind die einander in axialer Richtung zugewandten Enden der ersten Schabekante und der zweiten Schabekante innerhalb desselben Gewindeganges des Gewindes angeordnet. Dabei können die einander zugewandten Enden innerhalb eines Gewindeganges angeordnet sein, welcher sich zumindest auch im Bereich des Schraubenspitzenabschnitts befindet. Ferner können die einander zugewandten Enden innerhalb eines Gewindeganges angeordnet sein, welcher in einem Übergangsbereich zwischen Schraubenspitzenabschnitt und Schaftabschnitt angeordnet ist. Mit anderen Worten können die einander zugewandten Enden innerhalb eines Gewindeganges angeordnet sein, der sich teilweise in dem (insbesondere kegelförmigen) Schraubenspitzenabschnitt und teilweise in dem (insbesondere kreiszylindrischen) Schaftabschnitt befindet.

Gemäß einem exemplarischen Ausführungsbeispiel kann die mindestens eine erste Schabekante zum Erweitern eines mittels der Schraube in einem Untergrund gebildeten Lochs bis auf nicht mehr als einen Kerndurchmesser des Schaftabschnitts ausgebildet sein. Anders ausgedrückt kann während des selbstbohrenden Formens des Lochs durch die Schraube in dem Untergrund (vorzugsweise einem Holzuntergrund) ausgehend von einer zum Beispiel punktförmigen Spitze am Ende des Schraubenspitzenabschnitts ein sich sukzessive aufweitendes Loch erzeugt werden, das sich im Bereich der mindestens einen ersten Schabekante radial nicht bis zu den Gewindegängen hin erstreckt. Anschaulich kann mittels der in Schraubrichtung am weitesten vorne angeordneten Schabekante bei einem Holzuntergrund ein Anfasern bzw. Ausfasern des Holzes gefördert werden, was den weiteren Eindrehvorgang der Schraube erleichtert, ohne ein unerwünschtes Ausziehen zu begünstigen.

Gemäß einem exemplarischen Ausführungsbeispiel kann die mindestens eine erste Schabekante zum Entfernen von Material eines Untergrunds ausgebildet sein, in den die Schraube einzubringen ist, um in dem Untergrund einen Hohlraum zum Aufnehmen des Schraubenspitzenabschnitts und eines Kerndurchmessers des Schaftabschnitts zu bilden.

Gemäß einem exemplarischen Ausführungsbeispiel können mehrere erste Schabekanten an dem Schraubenspitzenabschnitt vorgesehen sein. Zum Beispiel können mindestens zwei, insbesondere mindestens drei, vier oder mehr, erste Schabekanten umfänglich umlaufend um den zum Beispiel kegelförmigen Schraubenspitzenabschnitt angeordnet sein. Durch das Vorsehen mehrerer erster Schabekanten ist es möglich, eine in Umfangsrichtung homogenere Kraftverteilung beim Einbringen der Schraube in den Untergrund und ein gleichmäßiger geformtes Bohrloch zu erhalten. Zum Beispiel können die mehreren ersten Schabekanten homogen um den Umfang des Schraubenspitzenabschnitts angeordnet sein, zum Beispiel in einem festen (insbesondere gleichen) Winkelabstand zueinander.

Gemäß einem exemplarischen Ausführungsbeispiel kann die mindestens eine erste Schabekante sich in axialer Richtung geradlinig, d.h. ungekrümmt, entlang des Schraubenspitzenabschnitts erstrecken. Beim Drehvorgang der Schraube beim Einbringen in den Untergrund führt dies zu einer homogenen Lastverteilung in Axialrichtung und Radialrichtung.

Gemäß einem exemplarischen Ausführungsbeispiel kann die mindestens eine erste Schabekante sich über einen schraubenspitzenseitigen Gewindegang hinweg erstrecken. Mit anderen Worten kann ein erster Teilabschnitt der ersten Schabekante gegenüber dem Gewindegang schraubenspitzenseitig angeordnet sein und ein zweiter Teilabschnitt der ersten Schabekante gegenüber diesem Gewindegang schraubenkopfseitig angeordnet sein. Auf diese Weise kann sich eine jeweilige erste Schabekante über einen ausreichend langen axialen Bereich erstrecken, um wirksam Material des Untergrunds abzuschaben.

Gemäß einem exemplarischen Ausführungsbeispiel kann die mindestens eine zweite Schabekante zum Erweitern eines mittels der Schraube in einem Untergrund gebildeten Lochs auf einen Durchmesser zwischen einem Kerndurchmesser des Schaftabschnitts und einem Außendurchmesser der Gewindegänge ausgebildet sein. Durch das Vorsehen der mindestens einen zweiten Schabekante ist ein erleichtertes Eindrehen der Schraube ermöglicht, indem zum Beispiel bis auf den größten Kerndurchmesser des Schafts, und gegebenenfalls ein Stück weiter, aufgeweitet wird, ohne die Auszugskraft der Schraube durch ein zu starkes radiales Erweitern in radialer Richtung über die Gewindegänge hinweg zu beeinträchtigen.

Gemäß einem exemplarischen Ausführungsbeispiel kann die mindestens eine zweite Schabekante zum Entfernen von Material eines Untergrunds ausgebildet sein, in den die Schraube einzubringen ist, um in dem Untergrund einen Hohlraum zum Aufnehmen eines Teil des Schaftabschnitts zu bilden, der einen größeren Außendurchmesser als ein Kerndurchmesser des Schaftabschnitts hat. Allerdings sollte das Aufweiten nicht über radiale Außenenden der Gewindegänge hinaus erfolgen, da ansonsten die Auszugskräfte der Schraube aufgrund zu starken Fräsens verringert würden, weil die Schraube dann zu locker in dem dann zu großen Loch im Untergrund sitzen würde.

Gemäß einem exemplarischen Ausführungsbeispiel können mehrere zweite Schabekanten im Übergangsbereich zwischen Schraubenspitzenabschnitt und Schaftabschnitt vorgesehen sein. Zum Beispiel können mindestens zwei, insbesondere mindestens drei, vier oder mehr, zweite Schabekanten umfänglich umlaufend um einen zum Beispiel kreiszylindrischen Abschnitt des Schaftabschnitts angeordnet sein. Durch das Vorsehen mehrerer zweiter Schabekanten ist es möglich, eine homogenere Kraftverteilung beim Einbringen der Schraube in den Untergrund und ein gleichmäßiger geformtes Bohrloch zu erhalten. Zum Beispiel können die mehreren zweiten Schabekanten homogen um den Umfang des Schaftabschnitts angeordnet sein, zum Beispiel in einem festen Winkelabstand zueinander. Die mehreren zweiten Schabekanten können zueinander parallel angeordnet sein und/oder können sich in axialer Richtung der Schraube bzw. des Schaftabschnitts erstrecken.

Gemäß einem exemplarischen Ausführungsbeispiel kann die mindestens eine zweite Schabekante sich in axialer Richtung geradlinig (alternativ zur Mittelachse geneigt), d.h. ungekrümmt, entlang des Schaftabschnitts erstrecken. Beim Drehvorgang der Schraube beim Einbringen in den Untergrund führt dies zu einer homogenen Lastverteilung in Axialrichtung und Radialrichtung.

Gemäß einem exemplarischen Ausführungsbeispiel kann die mindestens eine erste Schabekante und/oder die mindestens eine zweite Schabekante eine scharfe Schneide oder eine Sägezahnschneide aufweisen. Andere schabend Material abtragende Ausgestaltungen der Schabekanten sind ebenfalls möglich.

Gemäß einem exemplarischen Ausführungsbeispiel kann die mindestens eine erste Schabekante und/oder die mindestens eine zweite Schabekante als Fräsrippe ausgebildet sein. Eine solche Fräsrippe kann in axialer Richtung linienförmig mit einer außenseitigen Schneide sein. Die Fräsrippe kann geradlinig oder gekrümmt (zum Beispiel auch um die Schraubenachse teilweise umlaufend geformt sein.

Gemäß einem exemplarischen Ausführungsbeispiel kann zwischen der mindestens einen ersten Schabekante und der mindestens einen zweiten Schabekante eine Lücke oder Vertiefung, insbesondere in axialer und/oder radialer Richtung, gebildet sein. Ein Winkelabstand zwischen einer jeweiligen ersten Schabekante und einer jeweiligen zweiten Schabekante in radialer Richtung kann zum Beispiel in einem Bereich zwischen 30° und 60° liegen, zum Beispiel bei 45°. Im Bereich der Lücke ist somit ein schabender Materialabtrag vermieden, was sich vorteilhaft auf die Auszugskräfte der Schraube auswirkt.

Gemäß einem Ausführungsbeispiel endet ein schraubenkopfseitiges Ende der mindestens einen ersten Schabekante an einer axialen Position, ausgehend von welcher sich ein in radialer Richtung bzw. in Umfangsrichtung von der mindestens einen ersten Schabekante beabstandetes schraubenspitzenseitiges Ende der mindestens einen zweiten Schabekante in Richtung des Schraubenkopfs hin erstreckt.

Gemäß einem exemplarischen Ausführungsbeispiel können die mindestens eine erste Schabekante und die mindestens eine zweite Schabekante derart voneinander beabstandet sein, dass eine stetige oder unstetige Kante bzw. allgemeiner ein Übergang zwischen Schraubenspitzenabschnitt und Schaftabschnitt schabekantenfrei ist. Anders ausgedrückt kann die mindestens eine erste Schabekante in Blickrichtung hin zum Schraubenkopf vor einem Übergang des Schraubenspitzenabschnitts in den Schaftabschnitt enden. Die mindestens eine zweite Schabekante kann hingegen in Blickrichtung hin zum Schraubenkopf erst nach dem Übergang des Schraubenspitzenabschnitts in den Schaftabschnitt beginnen. Eine Kante, an der sich keine Schabe- oder Fräskante befinden, kann durch einen Übergang zwischen einem kegeligen Schraubenspitzenabschnitt und einem sich daran direkt anschließenden kreiszylindrischen schraubenspitzenseitigen Endabschnitt des Schaftabschnitts gebildet sein.

Gemäß einem exemplarischen Ausführungsbeispiel kann oder können die mindestens eine erste Schabekante und/oder die mindestens eine zweite Schabekante in einer Seitenansicht der Schraube achsparallel orientiert sein. Mit anderen Worten kann es eine Seitenansicht der Schraube geben, in welcher sich die jeweilige Schabekante genau in Achsrichtung erstreckt. Dies führt zu einer symmetrischen Lastverteilung beim Einbringen der Schraube in einen Untergrund.

Gemäß einem exemplarischen Ausführungsbeispiel kann die mindestens eine erste Schabekante und/oder die mindestens eine zweite Schabekante in einer Seitenansicht der Schraube eine radiale Erstreckungskomponente aufweisen. Insbesondere die erste Schabekante kann sowohl eine radiale als auch eine axiale Erstreckungskomponente haben und sich beim Eindrehen zum Beispiel auf einem Kegelmantel bewegen.

Gemäß einem exemplarischen Ausführungsbeispiel kann oder können die mindestens eine erste Schabekante und/oder die mindestens eine zweite Schabekante einen polygonalen Querschnitt aufweisen. Dieser kann insbesondere ein trapezförmiger Querschnitt, ein dreieckförmiger Querschnitt oder ein rechteckförmiger Querschnitt sein. Diesbezüglich sind ganz verschiedene Geometrien möglich.

Gemäß einem exemplarischen Ausführungsbeispiel kann der Schraubenspitzenabschnitt kegelförmig ausgebildet sein. Alternativ kann der Schraubenspitzenabschnitt zum Beispiel eine andere rotationssymmetrische Form einnehmen, insbesondere in Abweichung von einer Kegelform eine konvexe oder konkave Geometrie an einer Mantelfläche zeigen.

Gemäß einem exemplarischen Ausführungsbeispiel kann der Schaftabschnitt an mindestens einem Zwischengewindeabschnitt zwischen benachbarten Gewindegängen einen inhomogenen Außendurchmesser aufweisen. Gemäß diesem besonders bevorzugten Ausführungsbeispiel kann die oben beschriebene Anordnung von Schabekanten, die einen zu starken Materialabtrag beim drehenden Einbringen der Schraube in einen Untergrund verhindern, synergistisch mit einer Geometrie der Zwischengewindeabschnitte kombiniert werden, bei der diese von einer durchgehenden uniradialen Kreiszylinderform abweichen. Dadurch kann eine besonders hohe Auszugskraft erreicht werden, da zum einen nur mäßig viel Material durch die Schabekanten abgetragen wird, was ein Herausziehen der Schraube mit nur geringem Kraftaufwand aus dem Untergrund wirksam hemmt. Zum anderen kann das dank der unterbrochen ausgebildeten Schabekanten noch vorhandene Material des Untergrunds dann in geometrische Inhomogenitäten in den Zwischengewindeabschnitten hinein gedrängt werden, was die Auszugskräfte in äußerst vorteilhafter Weise weiter erhöht.

Gemäß einem exemplarischen Ausführungsbeispiel kann der Schaftabschnitt an mindestens einem Zwischengewindeabschnitt zwischen benachbarten Gewindegängen eine Diskontinuität (als Beispiel für eine Geometrie mit inhomogenem Außendurchmesser) aufweisen. Im Rahmen dieser Anmeldung wird unter dem Begriff "Diskontinuität" insbesondere ein Oberflächenstrukturmerkmal innerhalb des Zwischengewindeabschnitts verstanden, an welchem Oberflächenstrukturmerkmal sich (insbesondere in einer Querschnittsansicht entlang einer Ebene, welche die Schraubenachse enthält) die Steigung der Oberflächentrajektorie des Zwischengewindeabschnitts ändert, insbesondere abrupt oder unstetig (im Sinne einer fehlenden mathematischen Ableitbarkeit an dieser Stelle) ändert. Das Vorzeichen der Steigung (d.h. der ersten Ableitung) der Kurve der externen Oberfläche des Zwischengewindeabschnitts in axialer Richtung kann sich an der Stelle der Diskontinuität von Plus nach Minus, von Minus nach Plus, von Null nach Plus, von Null nach Minus oder von Null, Plus oder Minus nach unendlich ändern. Der Verlauf der Kurve an der Stelle der Diskontinuität kann eckig oder abgerundet erfolgen. Durch die Diskontinuität kann ein Aufnahmeraum zum Aufnehmen von mittels der Schraube verdrängtem Material des Untergrunds gebildet werden. Entsprechend kann eine Schraube bereitgestellt werden, mit der eine hohe Haltekraft in einem Untergrund dadurch erreicht werden kann, dass sich nicht nur das Gewinde in dem Material des Untergrunds ein verankerndes Gegengewinde bildet, sondern zusätzlich auch zumindest ein durch die Diskontinuität abgegrenzter Teilabschnitt des Zwischengewindeabschnitts zwischen benachbarten Gewindegängen bei einem sukzessiven axialen Vortrieb der Schraube in radialer Richtung Material des Untergrunds verdrängt und dieses dadurch komprimiert. Neben großen Bereichen der Gewindeflanken wird auch zumindest ein Teilabschnitt des diskontinuierlich von einer durchgehenden Achsparallelität abweichenden Zwischengewindeabschnitts zwischen den Gewindegängen kraft- bzw. reibschlüssig gegen das Material des Untergrunds gepresst und erhöht somit die Verankerungskraft. Der durch das Einbringen des Gewindes in den Untergrund erzeugte Zwangsvorschub der Schraube in den Untergrund hinein führt aufgrund der nicht durchgehend uniradial achsparallel ausgebildeten Gewindezwischenabschnitte auch zu einer zusätzlichen Komponente der Verankerungskraft. Dadurch wird die Haltekraft der Schraube gegenüber herkömmlichen Schrauben verbessert bzw. werden die Auszugswerte erhöht. Ferner kann zudem ohne das Erfordernis des Hinzufügens weiteren Schraubenkernmaterials, anschaulich also durch bloßes Umlagern von Schraubenkernmaterial, vorzugsweise von vorne (d.h. von einem schraubenspitzenseitigen Bereich des Zwischengewindeabschnitts) nach hinten (d.h. zu einem schraubenkopfseitigen Bereich des Zwischengewindeabschnitts), die Haltekraft verbessert werden.

Gemäß einem exemplarischen Ausführungsbeispiel kann die Diskontinuität an dem mindestens einen Zwischengewindeabschnitt als Stufe ausgebildet sein. Insbesondere kann eine solche Stufe durch zwei radial zueinander versetzte und sich im Wesentlichen entlang der gleichen Erstreckungsrichtung erstreckende Abschnitte gebildet sein, welche Abschnitte durch einen Verbindungsabschnitt mit einer anderen Erstreckungsrichtung verbunden werden. An den beiden Verbindungsstellen kann ein runder Übergang oder bevorzugt ein kantiger Übergang gebildet sein. Eine als Stufe ausgebildete Diskontinuität ist herstellungstechnisch einfach, erhöht in signifikanter Weise die Auszugskraft und unterdrückt bei der Herstellung mittels Walzens wirksam, den Schaftabschnitt in unerwünschter Weise längszuverschieben.

Gemäß einem exemplarischen Ausführungsbeispiel kann die Stufe zwischen zwei achsparallelen Abschnitten des mindestens einen Zwischengewindeabschnitts mit unterschiedlichen Radien ausgebildet sein. Gemäß diesem bevorzugten Ausführungsbeispiel ist der Zwischengewindeabschnitt durch (vorzugsweise genau) zwei (vorzugsweise im Wesentlichen kreiszylindrische) Abschnitte mit mit der Schraubenachse zusammenfallenden (d.h. identischen) Achsen gebildet, welche Abschnitte sich in einer Ebene senkrecht zu der Schraubenachse unterschiedlich weit radial nach außen erstrecken. Im Übergangsbereich zwischen diesen Abschnitten kann eine Stufe vorgesehen sein, die gegenüber jedem dieser Abschnitte rechtwinklig abgewinkelt sein kann.

Gemäß einem exemplarischen Ausführungsbeispiel kann der achsparallele Abschnitt mit dem größeren Radius schraubenkopfseitig und der achsparallele Abschnitt mit dem kleineren Radius schraubenspitzenseitig angeordnet sein. Damit verjüngt sich der Zwischengewindeabschnitt gestuft hin zur Schraubenspitze, was zu einem hohen Bruchdrehmoment und hohen Auszugskräften führt. Ein unerwünschter Schraubenbruch beim Einwirken mechanischer Lasten kann dadurch wirksam unterdrückt werden.

Gemäß einem exemplarischen Ausführungsbeispiel erstreckt sich die Diskontinuität in radialer Richtung weniger weit nach außen als die radial äußeren Enden der Gewindegänge. Dadurch wird sichergestellt, dass die Diskontinuität die Gewindefunktion nicht stört oder beeinflusst.

Gemäß einem exemplarischen Ausführungsbeispiel kann die Diskontinuität um eine Schraubenachse vollumfänglich umlaufen, insbesondere parallel zu den Gewindegängen helikal um die Schraubenachse umlaufen. Somit kann die Diskontinuität, die dann für mehrere oder alle Zwischengewindeabschnitte als zusammenhängende Struktur ausgebildet sein kann, parallel zu Windungen der Gewindegänge verlaufen. Dies erlaubt eine einfache Herstellbarkeit und vermeidet radiale Anfangs- und Endstellen.

Gemäß einem anderen exemplarischen Ausführungsbeispiel kann der Schaftabschnitt an mindestens einem Zwischengewindeabschnitt einen zwischen benachbarten Gewindegängen sich in Richtung des Schraubenspitzenabschnitts verjüngenden, insbesondere konisch verjüngenden, Abschnitt aufweisen. Gemäß einem Ausführungsbeispiel ist somit eine Holzschraube bereitgestellt, die ohne die Notwendigkeit des Bildens eines Bohrlochs vor dem Einbringen der Holzschraube in einen Holzuntergrund selbstschneidend bzw. selbstbohrend in Letzterem verankert werden kann. Dabei wird eine hohe Haltekraft dadurch erreicht, dass sich nicht nur das selbstschneidende Gewinde in dem Holzmaterial ein verankerndes Gegengewinde schneidet, sondern zusätzlich auch die sich in Richtung des Schraubenspitzenabschnitts hin verjüngenden Abschnitte zwischen benachbarten Gewindegängen bei einem sukzessiven axialen Vortrieb der Holzschraube in radialer Richtung Holzmaterial verdrängen und dieses dadurch komprimieren, so dass neben großen Bereichen der Gewindeflanken auch die sich verjüngenden Zwischengewindeabschnitte zwischen den Gewindegängen kraft- bzw. reibschlüssig gegen das Holzmaterial gepresst werden und somit die Verankerungskraft erhöhen. Der durch das selbstfurchende Eindrehen des Gewindes in den Holzuntergrund erzeugte Zwangsvorschub der Schraube in den Holzuntergrund hinein führt aufgrund der Verjüngung der Gewindezwischenabschnitte auch zu einer zusätzlichen radialen Komponente der Verankerungskraft. Dadurch wird die Haltekraft der Holzschraube gegenüber herkömmlichen Holzschrauben verbessert bzw. werden die Auszugswerte erhöht. Ferner kann zudem ohne das Erfordernis des Hinzufügens weiteren Schraubenkernmaterials, anschaulich also durch bloßes Umlagern von Schraubenkernmaterial von vorne nach hinten, die Haltekraft verbessert werden. Indem die Verjüngungsrichtung der Zwischengewindeabschnitte mit der axialen Einbringrichtung der Holzschraube in den Holzuntergrund zusammenfällt bzw. identisch ist, verdrängen die zum Beispiel keil- bzw. pfeilförmigen Zwischengewindeabschnitte der Schraube das umgebende Material ähnlich wie Schrauben mit einem zylindrischen Kern, da die Querschnitte gleich groß sind, jedoch erhöhen vermutlich die radial vergrößerten Gewindeflanken die Haltekraft der Schraube sowie die durch die Neigung der Zwischengewindeabschnitte induzierten geänderten Druckverhältnisse.

Gemäß einem exemplarischen Ausführungsbeispiel können an dem Schaftabschnitt zwischen mehr als der Hälfte, bevorzugt zwischen mehr als 75 %, weiter bevorzugt zwischen mehr als 90 %, und höchst bevorzugt zwischen allen benachbarten Gewindegängen, die jeweiligen Zwischengewindeabschnitte mit inhomogenem Außendurchmesser (insbesondere mit Diskontinuität und/oder verjüngendem Abschnitt) ausgebildet sein. Besonders bevorzugt können an dem Schaftabschnitt zwischen allen benachbarten Gewindegängen Diskontinuitäten bzw. sich verjüngende Abschnitte ausgebildet sein. Alternativ kann nur ein Teilabschnitt des Schaftabschnitts mit Diskontinuitäten bzw. sich verjüngenden Abschnitten ausgestattet sein, wohingegen andere Zwischengewindeabschnitte einen anderen, zum Beispiel kreiszylinderförmigen Schaftteilabschnitt aufweisen können. Zwischen dem schraubenkopfnächsten Gewindegang und dem Schraubenkopf kann ebenfalls eine Diskontinuität bzw. ein sich verjüngender Abschnitt vorgesehen sein.

Gemäß einem exemplarischen Ausführungsbeispiel kann ein Außenprofil des mindestens einen Zwischengewindeabschnitts mit inhomogenem Außendurchmesser (insbesondere mit Diskontinuität oder mit Verjüngung) gegenüber einer Schraubenachse zumindest bereichsweise derart geneigt sein, dass ein sich an einen jeweils hinterseitigen Gewindegang anschließendes Zusatzmaterial durch ein sich an den jeweils vorderseitigen Gewindegang anschließendes Fehlmaterial ausgeglichen ist. Anders ausgedrückt kann an einem verdickten Bereich im Vergleich zu einem gedachten, entsprechenden kreiszylindrischen Schraubenkern genau die Materialmenge angelagert sein, die an einem verdünnten Bereich auf einer gegenüberliegenden anderen Seite gegenüber der Kreiszylindergeometrie eines massengleichen Schraubenkerns fehlt. In Summe kann damit die Masse eines Zwischengewindeabschnitts mit Inhomogenität der Masse eines entsprechenden, von einer Inhomogenität freien und durchgehend achsparallelen Zwischengewindeabschnitts gleichen. Dies ist vorteilhaft, da die Zwischengewindeabschnitte mit Diskontinuität oder mit sich verjüngendem Abschnitt folglich durch eine reine Materialumlagerung (insbesondere mittels Walzens) ausgehend von einem Rohling und somit mit geringerem Aufwand hergestellt werden können als dies bei einem Zusatzmaterial applizierenden Verfahren oder bei einem materialabtragenden Verfahren der Fall wäre.

Gemäß einem exemplarischen Ausführungsbeispiel kann die Schraube als Holzschraube zum, insbesondere vorbohrungsfreien, Einbringen in einen Holzuntergrund, insbesondere in einen massiven Holzuntergrund, ausgebildet sein. Die Geometrie der Schraube ist besonders gut dafür geeignet, verdrängtes Holzmaterial eines Holzuntergrunds aufzunehmen. Indem in einen Holzuntergrund die Schraube auch vorbohrungsfrei einbringbar ist, ist eine einfache Montage ermöglicht. Vorzugsweise ist dann das Gewinde auch als selbstschneidendes Gewinde ausgebildet.

Gemäß einem exemplarischen Ausführungsbeispiel kann die Schraube ferner einen an den Schaftabschnitt rückseitig direkt oder indirekt angeschlossenen Schraubenkopf aufweisen. Angrenzend an den Schraubenkopf kann zum Beispiel optional auch ein gewindefreier Abschnitt vorgesehen sein, insbesondere wenn ein Holzbauteil auf einem anderen Holzbauteil montiert werden soll. Für andere Anwendungen (zum Beispiel Montage eines Metallbauteils auf einem Holzbauteil) kann ein Vollgewinde ohne gewindefreien Abschnitt direkt angrenzend an den Schraubenkopf eingesetzt werden.

Gemäß einem exemplarischen Ausführungsbeispiel kann der Schraubenkopf mit einem Antrieb zum Drehantreiben der Schraube versehen sein. Ein solcher Antrieb dient zum formschlüssigen Kontakt mit einem Werkzeug zum Eindrehen der Schraube, wie zum Beispiel ein muskelbetriebener Schraubendreher oder ein motorbetriebenes Setzgerät (zum Beispiel ein Akkuschrauber). Ein rückseitiges Ende der Schraube kann somit durch den Schraubenkopf mit einem Antrieb zum Drehantreiben der Schraube gebildet sein. Der Antrieb kann als Längsschlitz, als Kreuzschlitz, als Imbus, als TORX-Antrieb oder als AW-Antrieb ausgebildet werden.

Schrauben gemäß exemplarischen Ausführungsbeispielen der Erfindung können mit symmetrischem oder asymmetrischem Gewinde ausgebildet werden. Bei einem asymmetrischen Gewinde ist die ansteigende Flanke mit einem anderen Anstiegswinkel versehen als die abfallende Flanke, wohingegen bei einem symmetrischen Gewinde der Winkel der ansteigenden Flanke und jener der abfallenden Flanke gleich sind. Erfindungsgemäße Schrauben (insbesondere Holzschrauben) können selbstschneidend bzw. selbstfurchend in einem Untergrund (insbesondere einem Holzuntergrund) ausgebildet sein. Als Schraubenspitzenabschnitt für Schrauben gemäß exemplarischen Ausführungsbeispielen können eine selbstbohrende bzw. selbstschneidende Spitze eingesetzt werden, die gekniffen oder gewalzt werden kann. Schrauben gemäß exemplarischen Ausführungsbeispielen können zum Beispiel aus Edelstahl (rostfrei), Kohlenstoffstahl, etc. hergestellt werden. Die Schraube kann beschichtet (zum Beispiel gewachst) oder verzinkt werden oder erst verzinkt und dann gewachst werden, um die Gleiteigenschaften der Schraube in einem Untergrund weiter zu verbessern.

Im Folgenden werden exemplarische Ausführungsbeispiele der vorliegenden Erfindung mit Verweis auf die folgenden Figuren detailliert beschrieben.
Figur 1 zeigt eine Holzschraube gemäß einem exemplarischen Ausführungsbeispiel mit unterbrochenen Schabekanten an bzw. nahe eines Schraubenspitzenabschnitts und mit kreiszylindrischen Zwischengewindeabschnitten an einem Schaftabschnitt.
Figur 2 zeigt eine Holzschraube gemäß einem anderen exemplarischen Ausführungsbeispiel mit unterbrochenen Schabekanten an bzw. nahe eines Schraubenspitzenabschnitts und mit eine Diskontinuität aufweisenden Zwischengewindeabschnitten an einem Schaftabschnitt.
Figur 3 zeigt eine Holzschraube gemäß noch einem anderen exemplarischen Ausführungsbeispiel mit unterbrochenen Schabekanten an bzw. nahe eines Schraubenspitzenabschnitts und mit sich zum Schraubenspitzenabschnitt hin konisch verjüngenden Zwischengewindeabschnitten an einem Schaftabschnitt.
Figur 4 bis Figur 6 zeigen eine jeweils vergrößerte Darstellung der Schraubenspitzenabschnitte der Holzschrauben gemäß Figur 1 bis Figur 3.
Figur 7 zeigt eine vergrößerte Darstellung eines Teils des Schaftabschnitts samt Gewinde der Holzschraube gemäß Figur 2.
Figur 8 zeigt eine vergrößerte Darstellung eines massekompensierten, sich zu einem Schraubenspitzenabschnitt hin konisch verjüngenden Abschnitts an einem Zwischengewindeabschnitt der Holzschraube gemäß Figur 3.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Gemäß einem exemplarischen Ausführungsbeispiel der Erfindung ist eine vorteilhaft als Holzschraube einsetzbare Schraube mit unterbrochenen Fräskanten an Schraubenspitzenabschnitt bzw. Schaftabschnitt bereitgestellt.

Bei Schrauben, insbesondere Holzschrauben, soll die Flankenfläche, die zum Kopf der Schraube zeigt, besonders hoch geformt sein. Wenn nun die Fräskanten einer Schraube zwischen den Gewindegängen die gleiche Höhe wie bei einem Gewindekernabschnitt mit höherem Abstand zur Schraubenachse haben, fräsen die Fräskanten zu viel Material weg und die Auszugskraft wird reduziert.

Um dieses Problem zu überwinden, kann gemäß einem exemplarischen Ausführungsbeispiel der Erfindung durch Fräsrippen oder Schabekanten, die zuerst Platz für die Spitze machen und dann auf die jeweilige Höhe des Gewindekerns angepasst sind, ein zu großes Fräsen bzw. ein zu großes Schaben verhindert werden. Dies kann insbesondere dadurch verhindert werden, dass auf der Gewindespitze durchgängige Fräsrippen oder Schabekanten angeordnet werden, die für die Gewindespitze und den dünnen Kerndurchmesser vorfräsen. Im Bereich des Übergangs zwischen Gewindespitze und Gewindeschaft können zusätzliche Fräsrippen oder Schabekanten derart angeordnet werden, dass sie nur die Teile des Gewindekerns freifräsen oder freischaben, die einen größeren Durchmesser als der minimale Kerndurchmesser haben. Durch an die Höhe zwischen den Gewindekern angepasste Fräsrippen kann das zu groß Fräsen oder zu groß Schaben verhindert und dadurch hohe Auszugskräfte erzielt werden. Durch die Unterbrechungen der Fräskanten oder Schabekanten wird bei dem niedrigeren Teil des Gewindes kein Material weggefräst oder weggeschabt.

Die Fräskanten oder Schabekanten können zum Beispiel achsparallel oder im Winkel (beispielsweise in einem Bereich zwischen -60° und +60°) gedreht sein. Zusätzlich können die Fräskanten oder Schabekanten in der Spitze radial zu den Fräskanten oder Schabekanten im Gewindegrund verdreht sein. Die Fräsrippen oder Schabekanten können einen trapezförmigen Querschnitt haben. Die Fräsrippen oder Schabekanten können auch andere Querschnitte haben, wie zum Beispiel dreieckförmig (zum Beispiel gleichseitig, rechtwinklig oder rechtwinklig-gleichschenklig, wobei der 90° Winkel im Dreieck am weitesten von der Schraubenachse entfernt sein kann oder der Schenkel mit dem 90° Winkel am Kern der Schraube tangential anliegen kann). Weiterhin können die Fräsrippen oder Schabekanten als Rechtecke, Quadrate oder sonstige polygonförmige Körper mit nach außen oder innen gekrümmten Flächen ausgebildet werden. Es ist möglich, die Fräsrippen als Segmente (anschaulich zum Beispiel ausgeformt ähnlich wie bei einem Bumerang vorwärts oder rückwärts gestellt) oder als Schräge mit Abständen zum Gewinde zu erstellen.

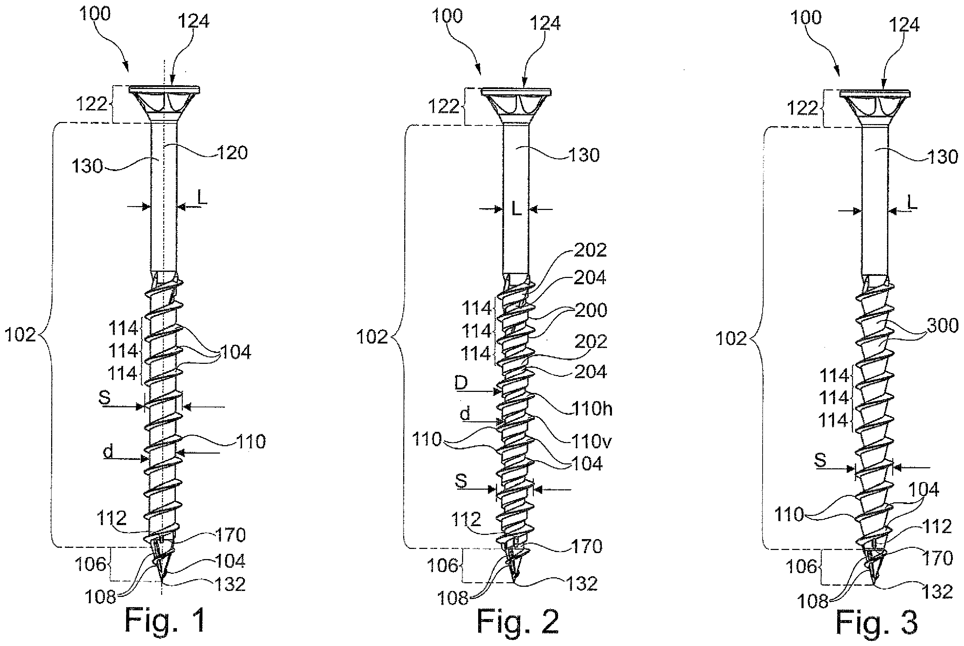

**Figur 1** zeigt eine Seitenansicht einer aus Stahl gebildeten, oberflächlich gewachsten Holzschraube 100 gemäß einem exemplarischen Ausführungsbeispiel mit einem Schaftabschnitt 102 mit Gewinde 104 zwischen einem kegelförmigen Schraubenspitzenabschnitt 106 und einem Schraubenkopf 122. Der Schaftabschnitt 102 hat kreiszylindrische Zwischengewindeabschnitte 114. Eine zentrale Längsachse oder Schraubenachse ist mit Bezugszeichen 120 gezeigt. **Figur 4** zeigt eine vergrößerte Darstellung des Schraubenspitzenabschnitts 106 samt Schabekanten 108, 112.

Die in Figur 1 gezeigte Holzschraube 100 ist so ausgestaltet, dass diese ohne die Notwendigkeit, vor dem Eindrehen der Holzschraube 100 in einen massiven Holzuntergrund (nicht gezeigt) eine Vorbohrung in dem Holzuntergrund zu erstellen (d.h. vorbohrungsfrei), in einen massiven Holzuntergrund eingedreht werden kann. Gemäß exemplarischen Ausführungsbeispielen der Erfindung ist es in der Regel sogar erwünscht, auf eine Vorbohrung zu verzichten, da dies zu besonders guten Auszugswerten der eingedrehten Holzschraube 100 führt.

An einer Rückseite des zentralen Schaftabschnitts 102 mit dem in Holz selbstschneidenden Gewinde 104 schließt sich in dem Ausführungsbeispiel gemäß Figur 1, beabstandet durch einen optionalen gewindefreien Abschnitt 130 mit konstantem Außendurchmesser L, der Schraubenkopf 122 mit einem Antrieb 124 an. Der Antrieb 124 ist so ausgebildet, dass ein Drehwerkzeug (nicht gezeigt) in den Antrieb 124 formschlüssig eingreifen kann und mittels Beaufschlagens der Holzschraube 100 mit einem Drehmoment diese vorbohrungsfrei in den massiven Holzuntergrund eindrehen kann. An einer Vorderseite - bezogen auf eine Setzrichtung der Holzschraube 100 - des Schaftabschnitts 102 mündet dessen Gewinde 104 unmittelbar in den an das Gewinde 104 direkt angeschlossenen kegeligen Schraubenspitzenabschnitt 106, wodurch die vorbohrungsfreie Eindrehbarkeit der Holzschraube 100 in den massiven Holzuntergrund bewirkt bzw. gefördert wird. Genauer gesagt beginnt das Gewinde 104 in unmittelbarer Nähe eines punktförmigen Endes 132 des kegeligen Schraubenspitzenabschnitts 106. Anders ausgedrückt geht das Gewinde 104 des Schaftabschnitts 102 nahtlos in das punktförmige Ende 132 über. Dadurch kann erreicht werden, dass durch das bloße Aufsetzen der punktförmigen Spitze bzw. des punktförmigen Endes 132 auf den massiven Holzuntergrund und mittels Ausübens mäßigen Drucks und eines Drehmoments auf den Antrieb 124 die punktförmige Spitze drehend auf den Holzuntergrund gedrückt oder gepresst wird, was dann zu einem Eindrehen der Holzschraube 100 und zu einem Selbstschneiden des Gegengewindes in dem Holzuntergrund führt.

Der Schaftabschnitt 102 erstreckt sich axial (und im Wesentlichen rotationssymmetrisch) entlang der Schraubenachse 120. Das Gewinde 104, das an dem Schaftabschnitt 102 außenseitig angeformt ist, weist ausgehend von dem Schaftabschnitt 102 sich radial erstreckende und helikal umlaufende Gewindegänge 110 auf, welche den radial äußersten Bereich des Schaftabschnitts 102 bilden.

An den Schaftabschnitt 102 schließt sich der kegelförmige Schraubenspitzenabschnitt 106 an, wobei an einem Übergang zwischen Schaftabschnitt 102 und Schraubenspitzenabschnitt 104 eine Kante 170 gebildet ist. Erste Schabekanten 108 sind in umfänglicher Richtung verteilt ausschließlich an dem Schraubenspitzenabschnitt 106 radial überstehend vorgesehen. Getrennt und beabstandet von den ersten Schabekanten 108 sind in umfänglicher Richtung gleichmäßig verteilte zweite Schabekanten 112 schwerpunktmäßig in einem zu dem Schraubenspitzenabschnitt 106 benachbarten Bereich des Schaftabschnitts 102 über diesen radial überstehend gebildet, wobei Ausläufer bzw. abfallende Flanken der zweiten Schabekanten 112 geringfügig in den Schraubenspitzenabschnitt 106 hineinreichen können. Zwischen den ersten Schabekanten 108 und den zweiten Schabekanten 112 sind in radialer Richtung Lücken vorgesehen. Durch das Unterbrechen bzw. beabstandete Vorsehen der Schabekanten 108, 112 im Vergleich zu einer durchgehenden Schabekante wird der beim Eindrehen der Schraube 100 einwirkende Druck auf das Holzmaterial deutlich reduziert, wodurch ein übermäßiges Aufweiten und somit eine Beeinträchtigung der Auszugskraft der Schraube 100 vermieden ist. Dieser Effekt kann durch den vor allem radialen Versatz der ersten Schabekanten 108 gegenüber den zweiten Schabekanten 112 weiter verstärkt werden. Die ersten Schabekanten 108 erstrecken sich in axialer Richtung (siehe Bezugszeichen 120) über im Vergleich zu den zweiten Schabekanten 112 unterschiedliche Bereiche bzw. Axialabschnitte der Schraube 100 hinweg.

Die ersten Schabekanten 108 sind konfiguriert zum Erweitern eines mittels der Schraube 100 in einem Untergrund gebildeten Lochs auf einen konstanten Kerndurchmesser d des Schaftabschnitts 102. Somit sind die ersten Schabekanten 108 zum Entfernen von Material eines Untergrunds ausgebildet, in den die Schraube 100 einzubringen ist, um in dem Untergrund einen Hohlraum zum Aufnehmen des Schraubenspitzenabschnitts 106 und des Kerndurchmessers d des Schaftabschnitts 102 zu bilden.

Im Unterschied dazu dienen die zweiten Schabekanten 112 zum Erweitern eines mittels der Schraube 100 in einem Untergrund gebildeten Lochs auf einen Durchmesser zwischen dem Kerndurchmesser d des Schaftabschnitts 102 und einem Außendurchmesser S der Gewindegänge 110.

Sowohl die ersten Schabekanten 108 als auch die zweiten Schabekanten 112 sind geradlinig verlaufende Rippen. Während die ersten Schabekanten 108 entlang eines Kegelmantels verlaufen, sind die zweiten Schabekanten 112 parallel zueinander auf einem kreiszylindrischen Mantel angeordnet. Die ersten Schabekanten 108 und die zweiten Schabekanten 112 haben jeweils einen trapezförmigen Querschnitt.

Durch die gezeigte Anordnung der Schabekanten 108, 112 kann eine hohe Auszugskraft erreicht werden.

**Figur 2** zeigt eine Holzschraube 100 gemäß einem anderen exemplarischen Ausführungsbeispiel mit unterbrochenen Schabekanten 108, 112 an bzw. nahe einem Schraubenspitzenabschnitt 106 und mit eine Diskontinuität 200 aufweisenden Zwischengewindeabschnitten 114 an dem Schaftabschnitt 102. **Figur 5** zeigt eine vergrößerte Darstellung des Schraubenspitzenabschnitts 106 samt Schabekanten 108, 112.

Der Schaftabschnitt 102 gemäß Figur 2 und Figur 5 weist an einem jeweiligen Zwischengewindeabschnitt 114 zwischen benachbarten Gewindegängen 110 einen inhomogenen Außendurchmesser auf. Genauer gesagt hat der Schaftabschnitt 102 an einem Zwischengewindeabschnitt 114 zwischen benachbarten Gewindegängen 110 eine Diskontinuität 200 in Form einer Stufe zwischen zwei achsparallelen Teilabschnitten 202, 204 des Zwischengewindeabschnitts 114 mit unterschiedlichen Außendurchmessern, die in Figur 2 als d und D bezeichnet sind, ausgebildet. Dabei gilt gemäß Figur 2: D>d.

Die besonders gute Haltekraft der Holzschraube 100 in einem massiven Holzuntergrund beruht nicht nur auf einem Formschluss zwischen dem selbstschneidenden Gewinde 104 der Holzschraube 100 einerseits und einem in den massiven Holzuntergrund selbstgeschnittenen Gegengewinde, sondern darüber hinaus auf einer Verdrängung und Verdichtung von Holzmaterial durch die sich zum Schraubenspitzenabschnitt 106 hin stufig radial zulaufenden Abschnitte bzw. Zwischengewindeabschnitte 114, die während des Setzvorgangs und im gesetzten Zustand der Holzschraube 100 gegen das verdrängte und komprimierte Holzmaterial allseitig und vollumfänglich um die Holzschraube 100 reibschlüssig drücken.

An einem jeweiligen Zwischengewindeabschnitt 114, d.h. einem jeweiligen axialen Abschnitt der Schraube 100 zwischen einem jeweils benachbarten Paar von Gewindegängen 110, ist als gezielte mechanische Störstruktur also die Diskontinuität 200 vorgesehen. Mit anderen Worten ist im Bereich der Diskontinuität 200 an dem Zwischengewindeabschnitt 114 ein Formmerkmal gebildet, an welchem die Erstreckungsrichtung der äußeren Oberfläche der Schraube 100 sich nicht parallel zu der Schraubenachse 120 erstreckt. Der Zwischengewindeabschnitt 114 weist an der Stufe eine im Wesentlichen senkrecht zu der Schraubenachse 120 verlaufende Übergangsfläche auf.

Wie in Figur 2 gezeigt, ist die Diskontinuität 200 von beiden, den zugehörigen Zwischengewindeabschnitt 114 axial begrenzenden Gewindegängen 110 axial beabstandet. Die Diskontinuität 200 ist somit räumlich getrennt von dem jeweils stufigen Übergang zwischen einem hinterseitigen Gewindegang 110h und dem achsparallelen Abschnitt 202 einerseits und zwischen einem vorderseitigen Gewindegang 110v und dem anderen achsparallelen Abschnitt 204 andererseits vorgesehen. Die Diskontinuität 200 läuft um die Schraubenachse 120 in mehreren Windungen um, und zwar in spiralförmiger Weise parallel zu den Gewindegängen 110 helikal um die Schraubenachse 120 herum.

Der achsparallele Abschnitt 202 mit dem größeren Durchmesser D ist dabei schraubenkopfseitig angeordnet, d.h. ist dem Schraubenkopf 122 näher als der achsparallele Abschnitt 204 mit dem kleineren Durchmesser d. Entsprechend ist der achsparallele Abschnitt 204 mit dem kleineren Durchmesser d schraubenspitzenseitig angeordnet, das heißt dem Schraubenspitzenabschnitt 106 näher als der achsparallele Abschnitt 202 mit dem größeren Durchmesser D. Der achsparallele Abschnitt 202 mit dem größeren Durchmesser D weist einen Durchmesser von ungefähr 75 % des Außendurchmessers S des Gewindes 104 auf. Ferner ist D ungefähr gleich dem Durchmesser L des gewindefreien Abschnitts 130. Der achsparallele Abschnitt 202 mit dem kleineren Durchmesser d hat einen Durchmesser von ungefähr 50 % des Außendurchmessers S des Gewindes 104. Ein kleinster Durchmesser der Holzschraube 100 ist der Durchmesser des Gewindekerns des Gewindes 104 und ist mit d bezeichnet.

Durch die gezeigte Anordnung der Schabekanten 108, 112 in Zusammenwirken mit den Zwischengewindeabschnitten 114 mit der Diskontinuität 200 kann eine außerordentlich hohe Ausdruckskraft erreicht werden. Die ersten Schabekanten 108 und die zweiten Schabekanten 112 sind gemäß Figur 2 und Figur 5 derart voneinander beabstandet, dass die Kante 170 am Übergang zwischen dem kegeligen Schraubenspitzenabschnitt 106 und dem kreiszylindrischen Ansatz des Schaftabschnitts 102 von Schabekanten frei ist. Anders ausgedrückt enden die ersten Schabekanten 108 schon unterhalb der Kante 170 und beginnen die axial und zusätzlich radial gegenüber den ersten Schabekanten 108 versetzten zweiten Schabekanten 112 oberhalb der Kante 170. Die Kante 170 selbst ist somit weder von den ersten Schabekanten 108 noch von den zweiten Schabekanten 112 bedeckt. Die zweiten Schabekanten 112 fungieren daher zum Entfernen von Material eines Untergrunds, in den die Schraube 100 einzubringen ist, um in dem Untergrund einen Hohlraum zum Aufnehmen eines Teil des Schaftabschnitts 102 zu bilden, der den größeren Außendurchmesser D als der Kerndurchmesser d des Schaftabschnitts 102 hat.

**Figur 3** zeigt eine Holzschraube 100 gemäß einem anderen exemplarischen Ausführungsbeispiel mit unterbrochenen Schabekanten 108, 112 an bzw. nahe einem Schraubenspitzenabschnitt 106 und mit sich konisch zu dem Schraubenspitzenabschnitt 106 hin verjüngenden Zwischengewindeabschnitten 114 an einem Schaftabschnitt 102. **Figur 6** zeigt eine vergrößerte Darstellung des Schraubenspitzenabschnitts 106 samt Schabekanten 108, 112.

Der Schaftabschnitt 102 weist gemäß Figur 3 und Figur 6 an den jeweiligen Zwischengewindeabschnitten 114 zwischen benachbarten Gewindegängen 110 sich in Richtung des Schraubenspitzenabschnitts 106 konisch verjüngende Abschnitte 300 auf.

Die besonders gute Haltekraft der Holzschraube 100 in einem massiven Holzuntergrund beruht nicht nur auf einem Formschluss zwischen dem selbstschneidenden Gewinde 104 der Holzschraube 100 einerseits und einem in den massiven Holzuntergrund selbstgeschnittenen Gegengewinde, sondern darüber hinaus auf einer Verdrängung und Verdichtung von Holzmaterial durch die sich zum Schraubenspitzenabschnitt 106 hin verjüngenden Abschnitte 300, die während des Setzvorgangs und im gesetzten Zustand der Holzschraube 100 gegen das verdrängte und komprimierte Holzmaterial allseitig und vollumfänglich um die Holzschraube 100 reibschlüssig drücken.

Wie bereits angesprochen, befinden sich in Richtung des Schraubenspitzenabschnitts 106 hin konisch verjüngte Abschnitte 300 mit hier im Wesentlichen kegelstumpfförmiger Geometrie zwischen benachbarten Gewindegängen 110 des Gewindes 104. Diese Zwischengewindeabschnitte 114 sind, in Kombination mit der Gewinde 104-Schraubenspitzenabschnitt 106-Kopplung und dem Vorsehen der Schabekanten 108, 112 zum vorbohrungsfreien Einbringen der Holzschraube 100 in einen massiven Holzuntergrund, der eigentliche Grund für die erhöhte Haltekraft der Holzschraube 100 in dem Holzuntergrund. Wird nämlich nach Aufsetzen des punktförmigen Endes 132 auf eine Außenfläche des massiven Holzuntergrunds mittels Drehantreibens des Antriebs 124 die Holzschraube 100 in den Holzuntergrund selbstbohrend und selbstschneidend eingebracht, so bewirkt das Eindrehen des Gewindes 104 in den bereits gebildeten Teil des Gegengewindes in dem Holzuntergrund einen Zwangsvorschub der Holzschraube 100 in den Holzuntergrund. Durch die resultierende kombinierte Dreh- und Axialbewegung der Holzschraube 100 hinein in den Holzuntergrund verdrängen und komprimieren die zur Schraubenachse 120 geneigten Zwischengewindeabschnitte 114 zwangsläufig Holzmaterial und üben auf dieses eine kombinierte Axial- und Radialkraft aus. Anders ausgedrückt wirken gerade die Zwischengewindeabschnitte 114 teils axial, teils radial auf das Holzmaterial ein, schieben sich keilförmig durch das Holzmaterial vorwärts, verpressen die festen Holzfasern und die dazwischen angeordneten weicheren Bereiche des Holzuntergrund in seitlicher Richtung und verankern unter Erzeugung einer zusätzlichen Haltekraft die Holzschraube 100 fest in dem massiven Holzuntergrund. Die Schabekanten 108, 112 haben bereits zuvor das Holz in begrenzter Weise angefasert und erleichtern daher das Eindrehen des Schaftabschnitts 102 in den Untergrund.

Durch die gezeigte Anordnung der Schabekanten 108, 112 in Zusammenwirken mit den Zwischengewindeabschnitten 114 mit der konischen Verjüngung kann also eine sehr hohe Auszugskraft erreicht werden.

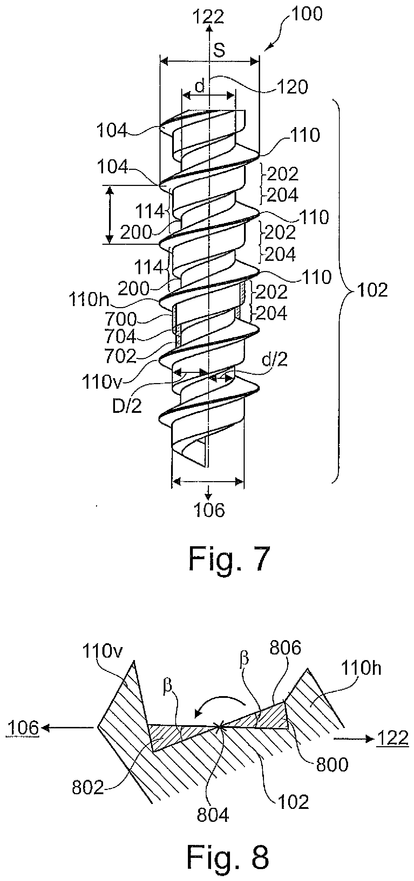

**Figur 7** zeigt eine vergrößerte Darstellung eines Teils des Schaftabschnitts 102 samt Gewinde der Holzschraube 100 gemäß Figur 2.

Figur 7 zeigt am Beispiel eines stufigen Zwischengewindeabschnitts 114, dass dessen Diskontinuität 200 derart ausgebildet ist, dass ein sich an einen hinterseitigen Gewindegang 110h anschließendes Zusatzmaterial 700 durch ein sich an einen vorderseitigen Gewindegang 110v anschließendes Fehlmaterial 702 gerade ausgeglichen ist. Somit ist der Zwischengewindeabschnitt 114 gegenüber der Schraubenachse 120 derart teils nach innen, teils nach außen achsparallel versetzt, dass der Zwischengewindeabschnitt 114 einen hypothetischen bzw. virtuellen massenäquivalenten Kreiszylinderkern in der Mitte (siehe Mittelpunkt 704) zwischen dem hinterseitigen Gewindegang 110h und dem vorderseitigen Gewindegang 110v schneidet. Dies zeigt, dass bei Holzschrauben 100 gemäß exemplarischen Ausführungsbeispielen die abgestuften Zwischengewindeabschnitte 114 bloß durch Materialumformung bzw. -umlagerung von einem vorderen Schraubenbereich zu einem hinteren Schraubenbereich gebildet werden. Diese Materialumformung bzw. -umlagerung kann zum Beispiel während des normalen Herstellungsprozesses der Holzschraube 100 mittels Walzens erfolgen. Damit ist ein aufwändiger zusätzlicher Materialauftrag genauso vermieden wie ein aufwändiger Materialentfernungsprozess. Vielmehr können ohne zusätzlichen Arbeitsgang die nach vorne hin stufenweise schmäler werdenden achsparallelen Abschnitte 202, 204 der Zwischengewindeabschnitte 114 während des normalen Herstellungsprozesses der Holzschraube 100 und somit ohne zusätzlichen Zeitaufwand erfolgen.

**Figur 8** zeigt eine vergrößerte Darstellung eines massekompensierten, sich zu einem Schraubenspitzenabschnitt 106 hin konisch verjüngenden Abschnitts bzw. Zwischengewindeabschnitts 114 an einem Schaftabschnitt 102 einer Holzschraube 100 gemäß einem exemplarischen Ausführungsbeispiel der Erfindung.

Figur 8 zeigt am Beispiel eines konisch verjüngten Zwischengewindeabschnitts 114, dass dessen Außenkante 806 im Querschnitt gegenüber einer Schraubenachse 120 (siehe Figur 1) derart verschwenkt ist, dass ein sich an einen hinterseitigen Gewindegang 110h anschließendes Zusatzmaterial 800 durch ein sich an einen vorderseitigen Gewindegang 110v anschließendes Fehlmaterial 802 gerade ausgeglichen ist. Somit ist der Zwischengewindeabschnitt 114 gegenüber der Schraubenachse 120 derart um eine senkrecht zur Papierachse von Figur 8 und durch einen Mittelpunkt 804 laufende Schwenkachse verschwenkt (siehe Winkel β), dass der Zwischengewindeabschnitt 114 einen hypothetischen bzw. virtuellen massenäquivalenten Kreiszylinderkern in der Mitte (siehe Mittelpunkt 804) zwischen dem hinterseitigen Gewindegang 110h und dem vorderseitigen Gewindegang 110v schneidet. Dies zeigt, dass bei Holzschrauben 100 gemäß exemplarischen Ausführungsbeispielen die verjüngten Zwischengewindeabschnitte 114 bloß durch Materialumformung bzw. - umlagerung von einem vorderen Schraubenbereich zu einem hinteren Schraubenbereich gebildet werden. Diese Materialumformung bzw. -umlagerung kann zum Beispiel während des normalen Herstellungsprozesses der Holzschraube 100 mittels Walzens erfolgen. Damit ist ein aufwändiger zusätzlicher Materialauftrag genauso vermieden wie ein aufwändiger Materialentfernungsprozess. Vielmehr können ohne zusätzlichen Arbeitsgang die nach vorne hin verjüngten Zwischengewindeabschnitte 114 während des normalen Herstellungsprozesses der Holzschraube 100 und somit ohne zusätzlichen Zeitaufwand erfolgen. Wenn also die virtuelle Schwenkachse in die Mitte zwischen zwei Gewindegängen 110 gelegt wird, wird an dem verdickten Bereich diejenige Materialmenge hinzugefügt, die von dem verdünnten Bereich entfernt wird.

Darüber hinaus zeigt Figur 8, dass ein Verkippwinkel β des verjüngten Zwischengewindeabschnitts 114 gegenüber einer Schraubenachse 120 zum Beispiel 15° betragen kann. Besonders bei einem Verkippwinkel zwischen ungefähr 5° und ungefähr 25° kann eine ausgeprägte Erhöhung der Haltekraft erreicht werden kann, ohne dass die Eindrehmomente übermäßig erhöht würden.

Mit den Figur 1 bis Figur 3 gezeigten Holzschrauben 100, aber ganz besonders mit den in Figur 2 und Figur 3 gezeigten Holzschrauben 100, kann die erhaltene Auszugskraft vorteilhaft deutlich erhöht werden.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schraube (100), aufweisend:
einen sich axial erstreckenden Schaftabschnitt (102);
ein Gewinde (104) an dem Schaftabschnitt (102), das ausgehend von dem Schaftabschnitt (102) sich radial erstreckende Gewindegänge (110) aufweist;
einen sich an den Schaftabschnitt (102) anschließenden Schraubenspitzenabschnitt (106);
mindestens eine erste Schabekante (108) an dem Schraubenspitzenabschnitt (106);
mindestens eine zweite Schabekante (112) in einem zu dem Schraubenspitzenabschnitt (106) benachbarten Bereich des Schaftabschnitts (102);
wobei die mindestens eine erste Schabekante (108) und die mindestens eine zweite Schabekante (112) voneinander beabstandet sind und sich in axialer Richtung über unterschiedliche Bereiche der Schraube (100) hinweg erstrecken;
wobei einander zugewandte Enden der mindestens einen ersten Schabekante (108) und der mindestens einen zweiten Schabekante (112) innerhalb desselben Gewindeganges (110) angeordnet sind.

2. Schraube (100) gemäß Anspruch 1, wobei sich die mindestens eine zweite Schabekante (112) ganz oder teilweise innerhalb eines schraubenspitzennächsten Gewindegangs (110) der sich zumindest teilweise in dem Schaftabschnitt (102) befindlichen Gewindegänge (110) erstreckt.

3. Schraube (100) gemäß einem der Ansprüche 1 bis 2, aufweisend zumindest eines der folgenden Merkmale:
wobei die mindestens eine erste Schabekante (108) zum Erweitern eines mittels der Schraube (100) in einem Untergrund gebildeten Lochs auf nicht mehr als einen Kerndurchmesser (d) des Schaftabschnitts (102) ausgebildet ist;
wobei die mindestens eine erste Schabekante (108) zum Entfernen von Material eines Untergrunds ausgebildet ist, in den die Schraube (100) einzubringen ist, um in dem Untergrund einen Hohlraum zum Aufnehmen des
Schraubenspitzenabschnitts (106) und eines Kerndurchmessers (d) des Schaftabschnitts (102) zu bilden;
wobei die mindestens eine zweite Schabekante (112) zum Erweitern eines mittels der Schraube (100) in einem Untergrund gebildeten Lochs auf einen Durchmesser zwischen einem Kerndurchmesser (d) des Schaftabschnitts (102) und einem Außendurchmesser (S) der Gewindegänge (110) ausgebildet ist;
wobei die mindestens eine zweite Schabekante (112) zum Entfernen von Material eines Untergrunds ausgebildet ist, in den die Schraube (100) einzubringen ist, um in dem Untergrund einen Hohlraum zum Aufnehmen eines Teil des Schaftabschnitts (102) zu bilden, der einen größeren Außendurchmesser (D) als ein Kerndurchmesser (d) des Schaftabschnitts (102) hat;
wobei die mindestens eine erste Schabekante (108) und/oder die mindestens eine zweite Schabekante (112) als Fräsrippe ausgebildet ist oder sind; und
wobei die Schraube als Holzschraube (100) ausgebildet ist zum, insbesondere vorbohrungsfreien, Einbringen in einen Holzuntergrund, insbesondere in einen massiven Holzuntergrund.

4. Schraube (100) gemäß einem der Ansprüche 1 bis 3, wobei zwischen der mindestens einen ersten Schabekante (108) und der mindestens einen zweiten Schabekante (112) eine Lücke oder Vertiefung, insbesondere in axialer und/oder radialer Richtung, gebildet ist.

5. Schraube (100) gemäß einem der Ansprüche 1 bis 4, aufweisend eines der folgenden Merkmale:
wobei die mindestens eine erste Schabekante (108) und/oder die mindestens eine zweite Schabekante (112) in einer Seitenansicht der Schraube (100) achsparallel orientiert ist; und
wobei die mindestens eine erste Schabekante (108) und/oder die mindestens eine zweite Schabekante (112) in einer Seitenansicht der Schraube (100) eine radiale Erstreckungskomponente aufweist.

6. Schraube (100) gemäß einem der Ansprüche 1 bis 5, aufweisend zumindest eines der folgenden Merkmale:
wobei die mindestens eine erste Schabekante (108) und/oder die mindestens eine zweite Schabekante (112) einen polygonalen Querschnitt, insbesondere einen trapezförmigen Querschnitt, einen dreieckförmigen Querschnitt oder einen rechteckförmigen Querschnitt aufweist; und
wobei der Schraubenspitzenabschnitt (106) kegelförmig ausgebildet ist.

7. Schraube (100) gemäß einem der Ansprüche 1 bis 6, wobei der Schaftabschnitt (102) an mindestens einem Zwischengewindeabschnitt (114) zwischen benachbarten Gewindegängen (110) einen inhomogenen Außendurchmesser aufweist.

8. Schraube (100) gemäß einem der Ansprüche 1 bis 7, aufweisend zumindest eines der folgenden Merkmale:
wobei der Schaftabschnitt (102) an mindestens einem Zwischengewindeabschnitt (114) zwischen benachbarten Gewindegängen (110) eine Diskontinuität (200), insbesondere eine Stufe, weiter insbesondere eine Stufe zwischen zwei achsparallelen Teilabschnitten (202, 204) des Zwischengewindeabschnitts (114), aufweist; und
wobei der Schaftabschnitt (102) an mindestens einem Zwischengewindeabschnitt (114) zwischen benachbarten Gewindegängen (110) einen sich in Richtung des Schraubenspitzenabschnitts (106) verjüngenden, insbesondere konisch verjüngenden, Abschnitt (300) aufweist.

9. Schraube (100) gemäß Anspruch 7 oder 8, aufweisend zumindest eines der folgenden Merkmale:
wobei an dem Schaftabschnitt (102) zwischen mehr als der Hälfte, bevorzugt zwischen mehr als 75 %, weiter bevorzugt zwischen mehr als 90 %, und höchst bevorzugt zwischen allen benachbarten Gewindegängen (110) die jeweiligen Zwischengewindeabschnitte (114) mit inhomogenem Außendurchmesser, Diskontinuität (200) und/oder verjüngendem Abschnitt (300) ausgebildet sind; und
wobei ein Außenprofil des mindestens einen Zwischengewindeabschnitts (114) gegenüber einer Schraubenachse (120) derart abweicht, dass ein sich an einen jeweils hinterseitigen Gewindegang (110h) anschließendes Zusatzmaterial (800) durch ein sich an den jeweils vorderseitigen Gewindegang (110v) anschließendes Fehlmaterial (802) ausgeglichen ist.

10. Schraube (100) gemäß einem der Ansprüche 1 bis 9, ferner aufweisend einen an den Schaftabschnitt (102) rückseitig direkt oder indirekt angeschlossenen Schraubenkopf (122).

11. Schraube (100) gemäß Anspruch 10, wobei der Schraubenkopf (106) mit einem Antrieb (124) zum Drehantreiben der Schraube (100) versehen ist, wobei der Antrieb (124) insbesondere als Längsschlitz, als Kreuzschlitz, als Imbus, als TORX-Antrieb oder als AW-Antrieb ausgebildet ist.

12. Schraube (100) gemäß einem der Ansprüche 1 bis 11, wobei die mindestens eine erste Schabekante (108) und die mindestens eine zweite Schabekante (112) derart voneinander beabstandet sind, dass eine Kante (170) am Übergang zwischen Schraubenspitzenabschnitt (106) und Schaftabschnitt (102) schabekantenfrei ist.

13. Verfahren zum Herstellen einer Schraube (100) zum Einbringen in einen Untergrund, wobei das Verfahren aufweist:
Ausbilden eines sich axial erstreckenden Schaftabschnitts (102);
Ausbilden eines Gewindes (104) an dem Schaftabschnitt (102) mit ausgehend von dem Schaftabschnitt (102) sich radial erstreckenden Gewindegängen (110);
Ausbilden eines sich an den Schaftabschnitt (102) anschließenden Schraubenspitzenabschnitts (106);
Ausbilden mindestens einer ersten Schabekante (108) an dem Schraubenspitzenabschnitt (106);
Ausbilden mindestens einer zweiten Schabekante (112) in einem zu dem Schraubenspitzenabschnitt (106) benachbarten Bereich des Schaftabschnitts (102);
beabstandetes Vorsehen der mindestens einen ersten Schabekante (108) gegenüber der mindestens einen zweiten Schabekante (112) derart, dass sich die mindestens eine erste Schabekante (108) und die mindestens eine zweite Schabekante (112) in axialer Richtung über unterschiedliche Bereiche der Schraube (100) hinweg erstrecken, wobei einander zugewandte Enden der mindestens einen ersten Schabekante (108) und der mindestens einen zweiten Schabekante (112) innerhalb desselben Gewindeganges (110) angeordnet werden.

14. Verwendung einer Schraube (100) gemäß einem der Ansprüche 1 bis 12 zum insbesondere vorbohrungsfreien Einbringen in einen Holzuntergrund, insbesondere in einen Massivholzuntergrund.

## Claims

1. Screw (100) comprising:
an axially extending shaft portion (102);
a thread (104) at the shaft portion (102) which comprises radially extending thread pitches (110) originating from the shaft portion (102);
a screw tip portion (106) which is adjoining the shaft portion (102);
at least one first scraping edge (108) at the screw tip portion (106);
at least one second scraping edge (112) in a region of the shaft portion (102) which is adjacent to the screw tip portion (106);
wherein the at least one first scraping edge (108) and the at least one second scraping edge (112) are spaced from each other and extend in an axial direction over different regions of the screw (100);
wherein ends of the at least one first scraping edge (108) and the at least one second scraping edge (112) which are facing each other are arranged within the same thread pitch (110).

2. Screw (100) according to claim 1, wherein the at least one second scraping edge (112) extends entirely or partially within a thread pitch (110) closest to the screw tip of the thread pitches (110) which are at least partially located in the shaft portion (102).

3. Screw (100) according to one of the claims 1 to 2, comprising at least one of the following features:
wherein the at least one first scraping edge (108) for enlarging a hole which is formed by the screw (100) in a ground is formed on not more than a core diameter (d) of the shaft portion (102);
wherein the at least one first scraping edge (108) is configured for removing material of a ground in which the screw (100) is to be inserted, in order to form a hollow in the ground for receiving the screw tip portion (106) and a core diameter (d) of the shaft portion (102);
wherein the at least one second scraping edge (112) is configured for enlarging a hole which is formed by the screw (100) in a ground to a diameter between a core diameter (d) of the shaft portion (102) and an outer diameter (S) of the thread pitches (110);
wherein the at least one second scraping edge (112) is configured for removing material of a ground in which the screw (100) is to be inserted, in order to form a hollow in the ground for receiving a part of the shaft portion (102) which has a larger outer diameter (D) than a core diameter (d) of the shaft portion (102);
wherein the at least one first scraping edge (108) and/or the at least one second scraping edge (112) is or are configured as a milling rib; and
wherein the screw is configured as a wood screw (100) for, in particular in a pre-drilling-free manner, inserting in a wood ground, in particular in a massive wood ground.

4. Screw (100) according to one of the claims 1 to 3, wherein between the at least one first scraping edge (108) and the at least one second scraping edge (112) a gap or indentation is formed, in particular in the axial and/or radial direction.

5. Screw (100) according to one of the claims 1 to 4, comprising at least one of the following features:
wherein the at least one first scraping edge (108) and/or the at least one second scraping edge (112) is oriented in a manner parallel to the axis in a side view of the screw (100); and
wherein the at least one first scraping edge (108) and/or the at least one second scraping edge (112) comprises a radial extension component in a side view of the screw (100).

6. Screw (100) according to one of the claims 1 to 5, comprising at least one of the following features:
wherein the at least one first scraping edge (108) and/or the at least one second scraping edge (112) comprises a polygonal cross section, in particular trapezoid cross section, a triangular cross section or a rectangular cross section; and
wherein the screw tip portion (106) is formed in a cone-shaped manner.

7. Screw (100) according to one of the claims 1 to 6, wherein the shaft portion (102) at at least one intermediate thread portion (114) between adjacent thread pitches (110) comprises an inhomogeneous outer diameter.

8. Screw (100) according to one of the claims 1 to 7, comprising at least one of the following features:
wherein the shaft portion (102) at at least one intermediate thread portion (114) between adjacent thread pitches (110) comprises a discontinuity (200), in particular a step, further in particular a step between two axially parallel subportions (202, 204) of the intermediate thread portion (114); and
wherein the shaft portion (102) at at least one intermediate thread portion (114) between adjacent thread pitches (110) comprises a portion (300) which is tapering towards the screw tip portion (106), in particular conically tapering.

9. Screw (100) according to claim 7 or 8, comprising at least one of the following features:
wherein at the shaft portion (102) between more than half, preferably between more than 75%, further preferably between more than 90%, and most preferred between all, of the adjacent thread pitches (110), the respective intermediate thread portions (114) are formed with an inhomogeneous outer diameter, the discontinuity (200) and/or the tapering portion (300); and
wherein an outer profile of the at least one intermediate thread portion (114) deviates with respect to a screw axis (120) such that an additional material (800) which is adjoining a respectively rear-sided thread pitch (110h) is compensated by a lack of material (802) which is adjoining the respectively front-sided thread pitch (110v).

10. Screw (100) according to one of the claims 1 to 9, further comprising a screw head (122) which is directly or indirectly connected to the shaft portion (102) at a rear side.

11. Screw (100) according to claim 10, wherein the screw head (106) is provided with a drive (124) for rotatingly driving the screw (100), wherein the drive (124) in particular is formed as a longitudinal slot, a crossed slot, a hexkey, as a TORX-drive or as an AW-drive.

12. Screw (100) according to one of the claims 1 to 11, wherein the at least one first scraping edge (108) and the at least one second scraping edge (112) are spaced from each other such that an edge (170) at the transition between the screw tip portion (106) and the shaft portion (102) is free of a scraping edge.

13. Method of manufacturing a screw (100) for inserting in a ground, wherein the method comprises:
forming an axially extending shaft portion (102);
forming a thread (104) at the shaft portion (102) with thread pitches (110) which are radially extending originating from the shaft portion (102);
forming a screw tip portion (106) which is adjoining the shaft portion (102);
forming at least one first scraping edge (108) at the screw tip portion (106);
forming at least one second scraping edge (112) in a region of the shaft portion (102) which is adjacent to the screw tip portion (106);
providing in a spaced manner the at least one first scraping edge (108) opposing the at least one second scraping edge (112) such that the at least one first scraping edge (108) and the at least one second scraping edge (112) extend in an axial direction over different regions of the screw (100), wherein ends of the at least one first scraping edge (108) which are facing each other and the at least one second scraping edge (112) are arranged within the same thread pitch (110).

14. Use of a screw (100) according to one of the claims 1 to 12 for inserting, in particular in a pre-drilling-free manner, in a wood underground, in particular in a massive wood underground.

## Revendications

1. Vis (100) présentant :
une section formant tige (102) s'étendant axialement ;
un filetage (104) sur la section formant tige (102), qui présente des pas de vis (110) s'étendant radialement en partant de la section formant tige (102) ;
une section formant pointe de vis (106) située dans le prolongement de la section formant tige (102) ;
au moins un premier bord racleur (108) sur la section formant pointe de vis (106) ;
au moins un deuxième bord racleur (112) dans une zone, adjacente à la section formant pointe de vis (106), de la section formant tige (102) ;
**caractérisée en ce qu'**au moins un premier bord racleur (108) et au moins un deuxième bord racleur (112) sont tenus à distance l'un de l'autre et s'étendent dans une direction axiale sur différentes zones de la vis (100) ;
dans laquelle des extrémités tournées les unes vers les autres d'au moins un premier bord racleur (108) et d'au moins un deuxième bord racleur (112) sont disposées à l'intérieur du même pas de vis (110).

2. Vis (100) selon la revendication 1, **caractérisée en ce qu'**au moins un deuxième bord racleur (112) s'étend en totalité ou en partie à l'intérieur d'un pas de vis (110) le plus proche de la pointe de vis des pas de vis (110) se trouvant au moins en partie dans la section formant tige (102).

3. Vis (100) selon l'une quelconque des revendications 1 à 2, présentant au moins une des caractéristiques suivantes :
**caractérisée en ce qu'**au moins un premier bord racleur (108) est réalisé pour élargir un trou formé dans un support au moyen de la vis (100) sur au maximum un diamètre du noyau (d) de la section formant tige (102) ;
dans laquelle au moins un premier bord racleur (108) est réalisé pour retirer du matériau d'un support dans lequel la vis (100) est à introduire pour former, dans le support, une cavité pour recevoir la section formant pointe de vis (106) et un diamètre du noyau (d) de la section formant tige (102) ;
dans laquelle au moins un deuxième bord racleur (112) est réalisé pour élargir un trou formé dans un support au moyen de la vis (100) sur un diamètre entre un diamètre du noyau (d) de la section formant tige (102) et un diamètre extérieur (S) des pas de vis (110) ;
dans laquelle au moins un deuxième bord racleur (112) est réalisé pour retirer du matériau d'un support dans lequel la vis (100) est à introduire pour former, dans le support, une cavité pour loger une partie de la section formant tige (102), qui a un diamètre extérieur (D) plus grand qu'un diamètre du noyau (d) de la section formant tige (102) ;
dans laquelle au moins un premier bord racleur (108) et/ou au moins un deuxième bord racleur (112) sont réalisés en tant que nervure de fraisage ; et
dans laquelle la vis est réalisée en tant que vis à bois (100) destinée à être introduite, en particulier sans perçage préalable, dans un support en bois, en particulier dans un support en bois massif.

4. Vis (100) selon l'une quelconque des revendications 1 à 3, **caractérisée en ce qu'**un interstice ou un renfoncement est formé, en particulier dans une direction axiale et/ou radiale, entre au moins un premier bord racleur (108) et au moins un deuxième bord racleur (112) .

5. Vis (100) selon l'une quelconque des revendications 1 à 4, présentant une des caractéristiques suivantes :
**caractérisée en ce qu'**au moins un premier bord racleur (108) et/ou au moins un deuxième bord racleur (112) sont orientés de manière axialement parallèle dans une vue latérale de la vis (100) ; et
dans laquelle au moins un premier bord racleur (108) et/ou au moins un deuxième bord racleur (112) présentent, dans une vue latérale de la vis (100), une composante d'extension radiale.

6. Vis (100) selon l'une quelconque des revendications 1 à 5, présentant au moins une des caractéristiques suivantes :
**caractérisée en ce qu'**au moins un premier bord racleur (108) et/ou au moins un deuxième bord racleur (112) présentent une section transversale polygonale, en particulier une section transversale de forme trapézoïdale, une section transversale de forme triangulaire ou une section transversale de forme rectangulaire ; et
dans laquelle la section formant pointe de vis (106) est réalisée en forme de cône.

7. Vis (100) selon l'une quelconque des revendications 1 à 6, **caractérisée en ce que** la section formant tige (102) présente sur au moins une section formant filetage intermédiaire (114) entre des pas de vis (110) adjacents un diamètre extérieur non homogène.

8. Vis (100) selon l'une quelconque des revendications 1 à 7, présentant au moins une des caractéristiques suivantes :
**caractérisée en ce que** la section formant tige (102) présente, sur au moins une section de filetage intermédiaire (114) entre des pas de vis (110) adjacents, une discontinuité (200), en particulier un palier, par ailleurs en particulier un palier entre deux sections partielles (202, 204) axialement parallèles de la section de filetage intermédiaire (114) ; et
dans laquelle la section formant tige (102) présente sur au moins une section de filetage intermédiaire (114) entre des pas de vis (110) adjacents une section (300) se rétrécissant en direction de la section formant pointe de vis (106), en particulier se rétrécissant de manière conique.

9. Vis (100) selon la revendication 7 ou 8, présentant au moins une des caractéristiques suivantes :
**caractérisée en ce que** les sections de filetage intermédiaires (114) respectives avec un diamètre extérieur non homogène, une discontinuité (200) et/ou une section (300) se rétrécissant sont réalisées sur la section formant tige (102) entre plus de la moitié, de manière préférée entre plus de 75 %, par ailleurs de manière préférée entre plus de 90 %, et au maximum de manière préférée entre tous les pas de vis (110) adjacents ; et
dans laquelle un profil extérieur d'au moins une section de filetage intermédiaire (114) diverge par rapport à un axe de vis (120) de telle manière qu'un matériau supplémentaire (800) situé dans le prolongement d'un pas de vis respectivement côté arrière (110h) est compensé par un matériau manquant (802) situé dans le prolongement du pas de vis respectivement côté avant (IlOv) .

10. Vis (100) selon l'une quelconque des revendications 1 à 9, présentant en outre une tête de vis (122) située dans le prolongement directement ou indirectement côté arrière de la section formant tige (102) .

11. Vis (100) selon la revendication 10, **caractérisée en ce que** la tête de vis (106) est pourvue d'une empreinte (124) pour entraîner en rotation la vis (100), dans laquelle l'empreinte (124) est réalisée en particulier en tant qu'entaille longitudinale, en tant qu'entaille cruciforme, en tant que pan creux, en tant qu'empreinte TORX ou en tant qu'empreinte AW.

12. Vis (100) selon l'une quelconque des revendications 1 à 11, **caractérisée en ce qu'**au moins un premier bord racleur (108) et au moins un deuxième bord racleur (112) sont tenus à distance l'un de l'autre de telle manière qu'un bord (170) est sans bord racleur sur le passage entre la section formant pointe de vis (106) et la section formant tige (102).

13. Procédé pour fabriquer une vis (100) destinée à être introduite dans un support, **caractérisé en ce que** le procédé présente :
la réalisation d'une section formant tige (102) s'étendant axialement ;
la réalisation d'un filetage (104) sur la section formant tige (102) avec des pas de vis (110) s'étendant radialement en partant de la section formant tige (102) ;
la réalisation d'une section formant pointe de vis (106) située dans le prolongement de la section formant tige (102) ;
la réalisation d'au moins un premier bord racleur (108) sur la section formant pointe de vis (106) ;
la réalisation au moins d'un deuxième bord racleur (112) dans une zone, adjacente à la section formant pointe de vis (106), de la section formant tige (102) ;
la prévision à distance d'au moins un premier bord racleur (108) par rapport à au moins un deuxième bord racleur (112) de telle manière qu'au moins un premier bord racleur (108) et au moins un deuxième bord racleur (112) s'étendent dans une direction axiale sur différentes zones de la vis (100), dans lequel des extrémités tournées les unes vers les autres d'au moins un premier bord racleur (108) et d'au moins un deuxième racleur (112) sont disposées à l'intérieur du même pas de vis (110).

14. Utilisation d'une vis (100) selon l'une quelconque des revendications 1 à 12 destinée à être introduite en particulier sans perçage préalable dans un support en bois, en particulier dans un support en bois massif.
